# FASCICULE DE BREVET EUROPEEN

(11) **EP 2 845 806 B1**
(45) Date de publication et mention de la délivrance du brevet: **01.02.2017**
(21) Numéro de dépôt: 14306379.0
(22) Date de dépôt: 09.09.2014
(51) Int. Cl.: B64D 33/04, F02K 1/15, F02K 1/18, F02K 1/06, F02K 1/09, B64C 15/02

(54) **Aéronef comprenant un dispositif de commande d'une tuyère à section variable alimentè par deux alimentations électriques indépendantes**
Luftfahrzeug, das eine Steuervorrichtung einer Düse mit variablem Durchmesser umfasst, die über zwei unabhängige elektrische Leitungen versorgt wird
Aircraft including a device for controlling a variable nozzle section supplied by two independent electric power supplies

(30) Priorité: 10.09.2013 FR 1358695
(43) Date de publication de la demande: 11.03.2015
(73) Titulaire: AIRBUS OPERATIONS (SAS), 31060 Toulouse (FR)
(72) Inventeur: Bulin, Guillaume, 31700 BLAGNAC (FR); Calvairac, Pierre, 31470 FONSORBES (FR); Lecointre, Nicolas, 31300 TOULOUSE (FR); Roux, Paul-Emile, 31300 TOULOUSE (FR)
(74) Mandataire: Fantin, Laurent

(56) Documents cités:
- EP-A2- 1 978 231
- EP-A2- 2 360 367
- WO-A1-90/08893
- WO-A1-99/41146
- US-A1- 2012 104 160
- US-B1- 6 439 504

## Description

La présente invention se rapporte à un aéronef comprenant un dispositif de commande d'une tuyère à section variable ainsi qu'à un procédé de gestion de l'alimentation électrique d'un dispositif de commande d'une tuyère à section variable d'un aéronef.

Un tel aéronef est connu de EP 2 360 367 A2, qui est considéré comme l'art antérieur le plus proche et décrit les caractéristiques du préambule de la revendication 1.

Pour réduire la consommation de carburant, certains aéronefs disposent d'une motorisation avec une tuyère à section variable. Ainsi, il est possible d'adapter le flux traversant la tuyère, en modifiant sa section, aux conditions extérieures et au régime de fonctionnement du moteur afin d'optimiser le rendement de la motorisation.

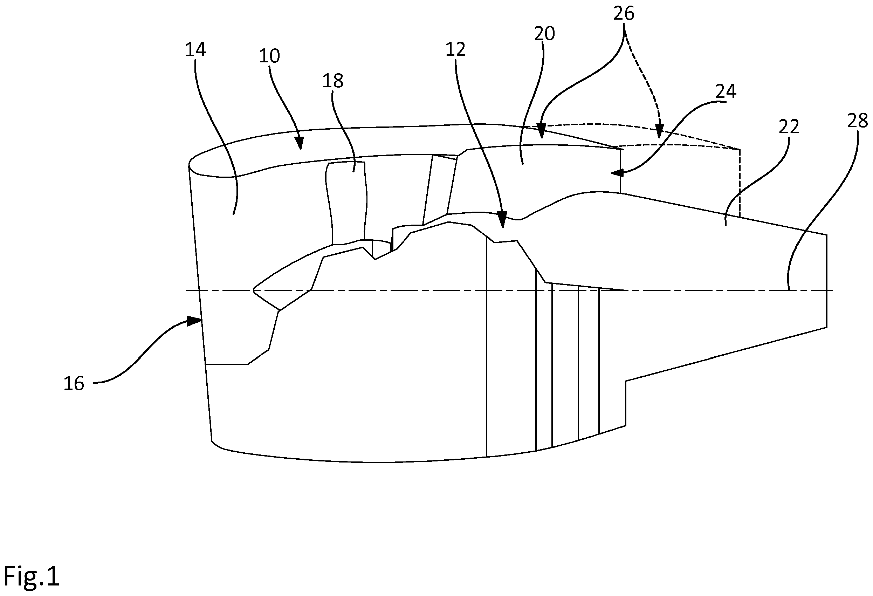

Selon un mode de réalisation illustré sur la figure 1, un ensemble propulsif d'un aéronef comprend une nacelle 10 dans laquelle est disposée de manière sensiblement concentrique une motorisation 12 reliée par l'intermédiaire d'un mât au reste de l'aéronef.

La nacelle 10 comprend une paroi intérieure délimitant un conduit 14 avec une entrée d'air 16 à l'avant, une première partie du flux d'air entrant, appelée flux primaire, traversant la motorisation 12 pour participer à la combustion, la seconde partie du flux d'air, appelée flux secondaire, étant entrainée par une soufflante 18 et s'écoulant dans un conduit annulaire 20 délimité par la paroi intérieure de la nacelle et la paroi extérieure de la motorisation. A l'arrière, le flux primaire s'échappe via une tuyère fixe 22 avec une portion tronconique dont le diamètre se réduit selon le sens d'écoulement des flux. Le flux secondaire s'échappe via une sortie 24 délimitée à l'intérieur par la tuyère fixe 22 et à l'extérieur par une tuyère 26 avec au moins une partie mobile correspondant à la tuyère à section variable 26 prévue à l'extrémité arrière de la nacelle.

Selon un mode de réalisation, la tuyère à section variable 26 comprend au moins une partie qui peut se translater selon une direction de déplacement parallèle à la direction longitudinale du moteur (correspondant à l'axe du moteur référencé 28) entre deux positions extrêmes correspondant à une première position avant illustrée en trait fort sur la figure 1 et une position arrière illustrée en pointillés sur la figure 1. Dans la mesure où la tuyère fixe a une forme tronconique, il est possible de contrôler la section de sortie de la tuyère à section variable en ajustant la position de cette dernière selon la direction de déplacement.

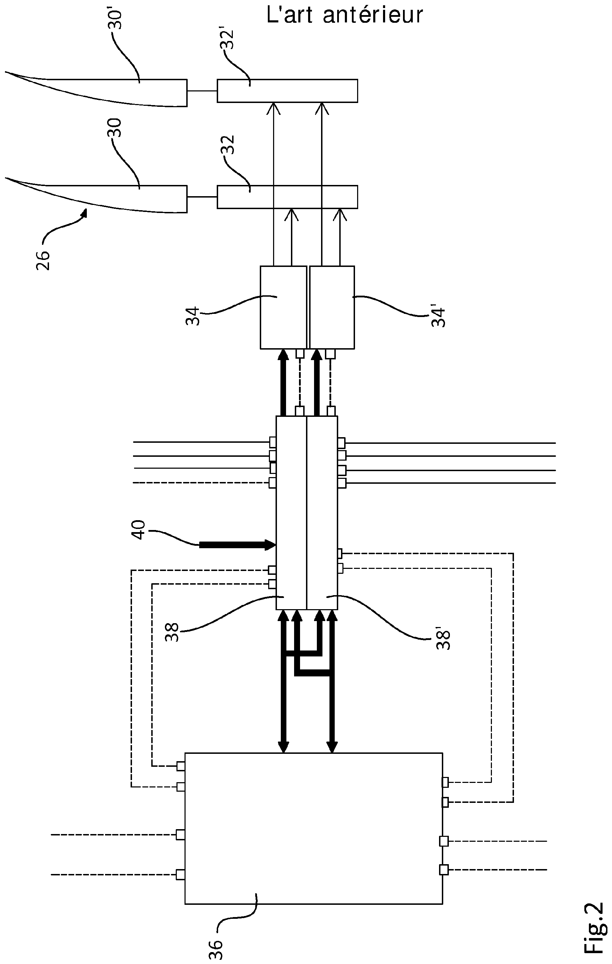

Selon un mode de réalisation illustré sur la figure 2, la tuyère à section variable 26 comprend des parties mobiles 30 qui se déplacent grâce à une chaîne de transmission mécanique 32 entrainée par un moteur 34. Chaque tuyère comprend deux parties mobiles 30, 30', disposées de manière symétrique par rapport à un plan médian vertical de la tuyère. La chaîne de transmission mécanique 32 permet de transformer le mouvement de rotation de l'arbre de sortie du moteur 34 en un mouvement de translation selon la direction de déplacement des parties mobiles. Ainsi, il existe une première chaîne de transmission mécanique 32 entre le moteur 34 et la partie mobile 30 et une seconde chaîne de transmission mécanique 32' entre le moteur 34' et la partie mobile 30'.

Sur la figure 2, on a illustré un dispositif de commande d'une tuyère à section variable selon l'art antérieur.

Pour contrôler la position des parties mobiles 30, 30', la chaîne de commande comprend un système de régulation 36 de la motorisation appelé FADEC (pour Full Authority Digital Engine Control), et un organe de contrôle 38 appelé PE (pour Power Electronics) assurant le contrôle du moteur 34.

Ainsi, lorsque le système de régulation 36 transmet un signal à l'organe de contrôle 38, ce dernier ordonne la rotation du moteur 34 qui par l'intermédiaire des chaînes de transmission mécaniques 32, 32' génère la translation des parties mobiles 30, 30'. L'organe de contrôle 38 assure entre autres la fonction de convertisseur de puissance entre un circuit de commande en amont et un circuit de puissance en aval. Selon un mode de réalisation, un organe de contrôle 38 se présente sous la forme d'une électronique de puissance comprenant de nombreux composants électriques tels que des onduleurs ou des transformateurs, pour assurer la fonction de convertisseur de puissance, et des composants électroniques pour assurer l'intelligence de régulation des moteurs électriques. Cette intelligence de régulation peut permettre de positionner de manière fiable et précise selon différentes positions les parties mobiles et d'assurer la gestion des fins de course des parties mobiles, notamment le ralentissement des moteurs et leurs arrêts.

Selon une architecture, un organe de contrôle 38 est positionné proche du moteur 34 qu'il contrôle. Ainsi, l'organe de contrôle 38 est positionné dans la nacelle et relié au moteur par l'intermédiaire de câbles assurant l'alimentation électrique du moteur 34 et sa commande.

Pour répondre aux contraintes imposées par les autorités de certification, le dispositif de commande comprend de nombreux éléments redondants pour améliorer la fiabilité de pilotage à défaut d'améliorer la fiabilité des éléments eux-mêmes.

Ainsi, par ensemble propulsif, le dispositif de commande comprend deux organes de contrôle 38 et 38', deux moteurs 34 et 34', un pour chaque organe de contrôle, chacun d'eux étant capable d'engendrer le mouvement de toutes les parties mobiles 30.

Cette solution permet de respecter les contraintes imposées par les autorités de certification.

Sur le plan de l'alimentation électrique, un aéronef comprend une première barre d'alimentation électrique principale reliée à un premier coeur électrique ainsi qu'une deuxième barre d'alimentation électrique principale reliée à un deuxième coeur électrique, chaque barre d'alimentation électrique principale alimentant plusieurs sous barres d'alimentation électrique qui alimentent chacune plusieurs lignes d'alimentation électrique.

Ainsi, la disponibilité de l'alimentation d'une ligne d'alimentation électrique est très légèrement inférieure à la disponibilité de la sous barre d'alimentation électrique à laquelle elle est reliée, la disponibilité de la sous barre d'alimentation électrique étant très légèrement inférieure à la disponibilité de la barre d'alimentation électrique principale à laquelle elle est reliée.

Concernant le dispositif de commande d'une tuyère à section variable, chaque organe de contrôle 38, 38' pourrait être alimenté par une seule alimentation électrique 40 reliée à une ligne d'alimentation électrique à la manière d'un système d'inversion de poussée.

Toutefois, cette solution n'est pas envisageable car le niveau de disponibilité d'une ligne d'alimentation électrique n'est pas suffisamment élevé pour la fonction de la tuyère à section variable.

Pour obtenir le niveau de disponibilité requis en matière d'alimentation électrique, une solution consiste à alimenter le dispositif de commande d'une tuyère à section variable par une barre d'alimentation électrique de l'alimentation électrique de l'avion et par un générateur dédié au dispositif de commande, implanté dans la nacelle.

Toutefois, cette solution n'est pas satisfaisante car elle conduit à augmenter la masse embarquée et les contraintes d'encombrement dans la nacelle.

La présente invention vise à remédier aux inconvénients de l'art antérieur.

A cet effet, l'invention a pour objet un aéronef selon la revendication 1, comprenant un dispositif de commande d'une tuyère à section variable de l'aéronef comprenant au moins un organe de contrôle alimenté par une première alimentation électrique avion reliée à au moins un générateur moteur, ledit organe de contrôle étant caractérisé en ce qu'il est alimenté par une deuxième alimentation électrique reliée à une source d'alimentation électrique de l'aéronef indépendante de la première alimentation électrique avion.

De préférence, l'organe de contrôle est alimenté par un générateur moteur et par une deuxième alimentation électrique indépendante des générateurs moteurs.

Selon un premier mode de réalisation, la deuxième alimentation électrique est reliée au générateur CSMG de l'aéronef.

Selon un deuxième mode de réalisation, la deuxième alimentation électrique est reliée à un groupe auxiliaire de puissance APU de l'aéronef.

Selon un troisième mode de réalisation, la deuxième alimentation électrique est reliée à au moins un accumulateur d'énergie électrique de l'aéronef. Avantageusement, l'organe de contrôle comprend une première partie permettant de contrôler et d'alimenter au moins un actionneur et une deuxième partie permettant la connexion de manière alternée avec la première alimentation électrique avion ou avec la deuxième alimentation électrique. De préférence, au moins la deuxième partie de l'organe de contrôle est disposée au niveau du fuselage de l'aéronef.

Selon une autre caractéristique, l'organe de contrôle comprend un ensemble de contacteurs de puissance électrique permettant d'empêcher la mise en contact des deux alimentations électriques de manière électrique et mécanique.

Selon un mode de réalisation, un dispositif de commande comprend au niveau d'un premier ensemble propulsif un premier organe de contrôle dédié au contrôle d'une première tuyère à section variable et alimenté par une première alimentation électrique avion reliée indirectement au générateur moteur gauche (respectivement doit) et au niveau d'un second ensemble propulsif un deuxième organe de contrôle dédié au contrôle d'une deuxième tuyère à section variable et alimenté par une deuxième alimentation électrique avion reliée indirectement au générateur moteur droit (respectivement gauche).

Dans ce cas, les deux organes de contrôle sont de préférence alimentés par la même deuxième alimentation électrique et le dispositif de commande comprend une boîte de dérivation avec une première entrée reliée à la deuxième alimentation électrique et des sorties chacune reliée à un organe de contrôle. Selon une autre caractéristique, le dispositif de commande comprend pour chaque alimentation électrique un coupe-circuit pour isoler l'alimentation électrique de l'organe de contrôle.

L'invention propose également un procédé de gestion de l'alimentation électrique d'un dispositif de commande d'une tuyère à section variable d'un aéronef selon la revendication 14, caractérisé en ce qu'il consiste à alimenter l'organe de contrôle par une deuxième alimentation électrique reliée à une source d'alimentation électrique de l'aéronef indépendante de la première alimentation électrique avion lorsque ladite première alimentation électrique avion n'alimente plus l'organe de contrôle.

De préférence, le procédé de gestion comprend une étape qui consiste à vérifier la disponibilité de la deuxième alimentation électrique préalablement au basculement d'alimentation.

D'autres caractéristiques et avantages ressortiront de la description qui va suivre de l'invention, description donnée à titre d'exemple uniquement, en regard des dessins annexés sur lesquels :
- La figure 1 est une vue latérale d'un ensemble propulsif d'un aéronef avec un arrachement partiel permettant de montrer de manière schématique une tuyère à section variable,
- La figure 2 est une représentation schématique d'une architecture de commande d'une tuyère à section variable selon l'art antérieur,
- La figure 3 est une représentation schématique d'une architecture de commande d'une tuyère à section variable selon une variante qui illustre l'invention,
- La figure 4 est une représentation schématique des différentes sources électriques d'un aéronef,
- La figure 5 est une représentation schématique de l'architecture d'une alimentation électrique d'un dispositif de commande d'une tuyère à section variable,
- Les figures 6A à 6C sont des schémas illustrant un organe de contrôle selon un mode de réalisation respectivement à l'état inactif, lors du déploiement et lors de la rétraction d'une partie mobile d'une tuyère à section variable.

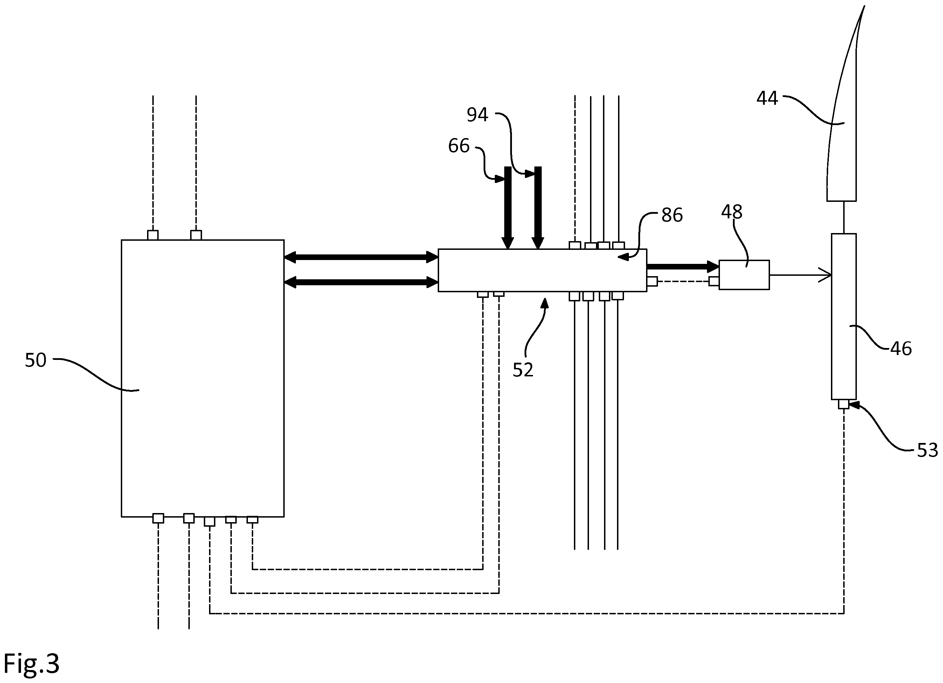

Une tuyère à section variable comprend au moins une partie mobile 44 reliée par l'intermédiaire d'une chaîne de transmission mécanique 46 à un actionneur 48 tel qu'un moteur, comme illustré de manière schématique sur la figure 3.

De préférence, chaque tuyère comprend deux parties mobiles 44, avantageusement sensiblement symétriques par rapport à un plan médian vertical de la tuyère, ainsi que deux actionneurs 48 un pour chaque partie mobile.

Quelle que soit la variante, la tuyère à section variable comprend au moins une partie mobile 44 et au moins un actionneur 48.

A titre d'exemple seulement, la tuyère à section variable et la chaine de transmission mécanique peuvent être identiques à celles décrites dans le document EP-779.429. Toutefois, l'invention n'est pas limitée à ce mode de réalisation de la tuyère à section variable, ni à cette chaine de transmission mécanique.

Pour assurer la commande de la tuyère à section variable, l'aéronef comprend un système de régulation 50 de la motorisation appelé également FADEC et un organe de contrôle 52 appelé également PE permettant d'alimenter en énergie électrique et de contrôler un actionneur 48.

Quelle que soit la configuration, une tuyère à section variable comprend au moins un dispositif de commande qui provoque et contrôle les mouvements de la ou des partie(s) mobiles 44 de la tuyère à section variable. Ce dispositif de commande comprend au moins un système de régulation 50, au moins un organe de contrôle 52 et au moins un actionneur 48.

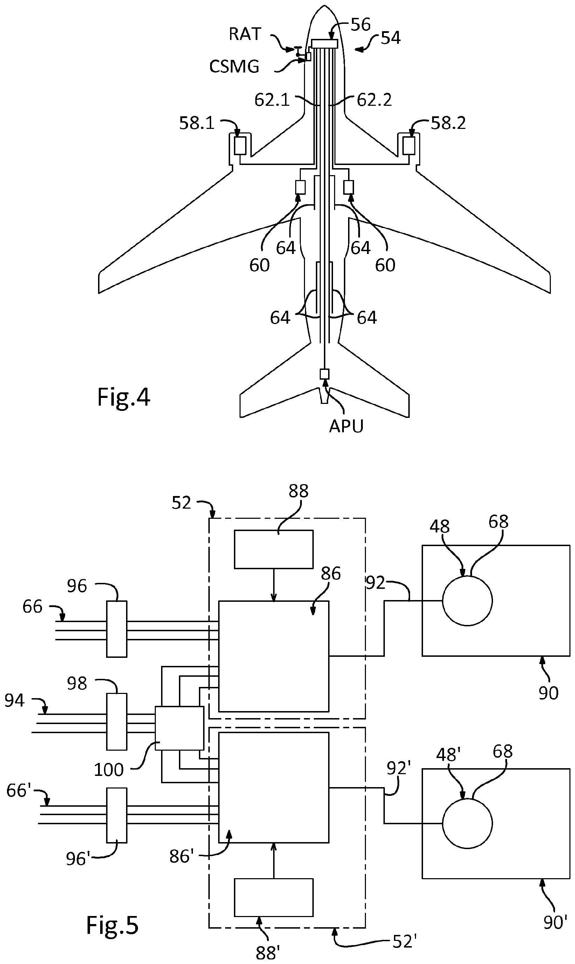

En complément, le dispositif de commande peut comprendre pour chaque partie mobile un capteur 53 qui contrôle et/ou mesure le déplacement réel de la ou des parties mobiles et renseigne le système de régulation 50 et/ou l'organe de contrôle 52. Selon un mode de réalisation, chaque capteur 53 est un capteur incrémentel angulaire de type RVDT (pour *Rotary Variable Differential Transformer) solidaire* d'une transmission mécanique pour chaque partie mobile. Comme illustré sur la figure 4, un aéronef 54 comprend un compartiment électrique et électronique 56 dans lequel sont disposés une partie des équipements électriques et/ou électroniques de l'aéronef, comme par exemple les coeurs électriques. L'aéronef comprend plusieurs sources d'énergie électrique indépendantes qui sont :
- Au moins un générateur moteur gauche 58.1 prévu au niveau de chaque motorisation de l'aile gauche et relié à un premier coeur électrique,
- Au moins un générateur moteur droit 58.2 prévu au niveau de chaque motorisation de l'aile droite et relié à un deuxième coeur électrique,
- Un groupe auxiliaire de puissance appelé générateur APU (pour Auxiliary Power Unit en anglais) qui est placé en général à l'arrière de l'aéronef,
- Un générateur appelé générateur CSMG (pour Constant Speed Motor Generator) qui produit de l'électricité à partir de la pression hydraulique d'un circuit hydraulique, ladite pression étant de préférence générée par une éolienne de secours appelé générateur RAT (pour Ram Air Turbine en anglais),
- Au moins un accumulateur d'énergie électrique comme par exemple des batteries 60.

Pour acheminer l'énergie électrique à ses différents équipements, l'aéronef 54 comprend deux barres d'alimentation électrique principales 62.1 et 62.2, une première barre d'alimentation électrique principale 62.1 alimentée par un premier générateur moteur droit 58.1 et une seconde barre d'alimentation électrique principale 62.2 alimentée par un second générateur moteur gauche 58.2. Aussi, les deux barres d'alimentation électriques principales 62.1 et 62.2 sont considérées comme des alimentations électriques indépendantes.

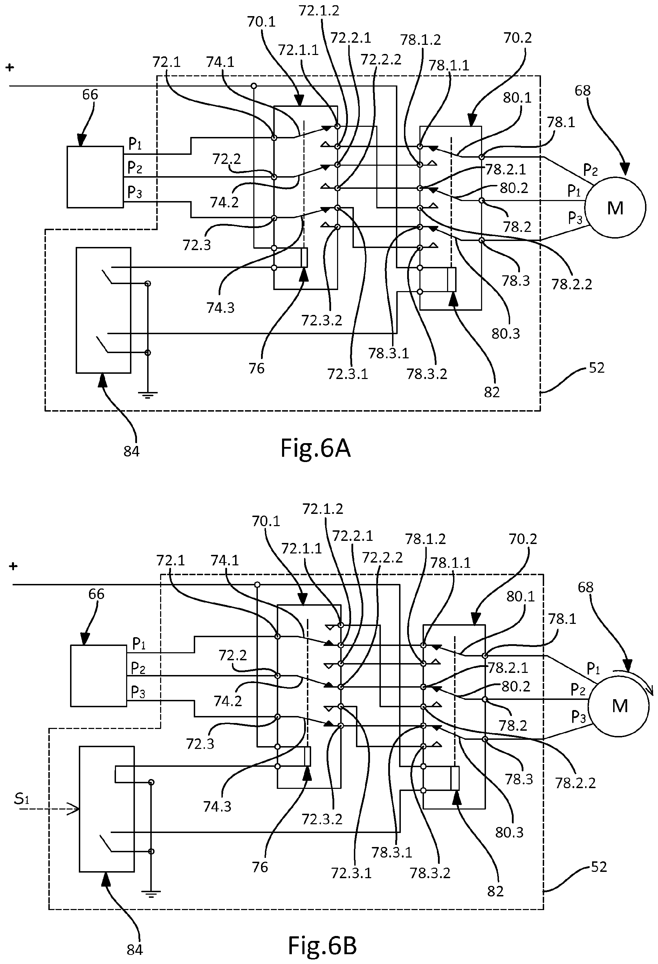

Chaque barre d'alimentation électrique principale 62.1 et 62.2 alimente plusieurs sous barres d'alimentation électrique 64 qui alimentent chacune au moins une alimentation électrique avion. Ainsi, un dispositif de commande d'une tuyère à section variable est alimenté par une alimentation électrique avion 66. Typiquement, l'alimentation électrique avion est de type triphasé, avec trois phases P1, P2 et P3 (visibles sur les figures 6A à 6C), à courant alternatif de 115 V avec une fréquence de 400 Hz.

Selon un mode de réalisation, l'actionneur 48 est un moteur électrique 68 configuré pour utiliser directement l'alimentation électrique avion 66 comme un moteur électrique triphasé fonctionnant en courant alternatif de 115 V et de 400 Hz.

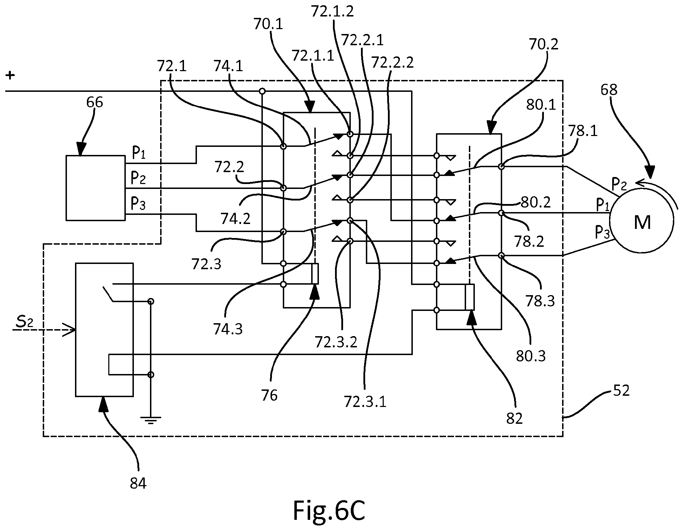

Selon cette conception, l'inversion du sens de rotation du moteur électrique 68 découle de l'inversion de phases, notamment des phases P1 et P2, au niveau des pôles du moteur électrique 48 comme illustré sur les figures 6B et 6C.

Selon un mode de réalisation, l'actionneur 48 est un moteur asynchrone triphasé. En parallèle, un organe de contrôle 52 comprend une sortie délivrant une alimentation électrique triphasée adaptée à l'actionneur et des moyens pour permuter les phases de l'alimentation électrique avion 66 afin de modifier le sens de rotation du moteur électrique 68. Ces moyens pour permuter les phases sont de type analogique.

Selon un mode de réalisation illustré sur les figures 6A à 6C, l'organe de contrôle 52 comprend au moins deux relais électriques 70.1 et 70.2 disposés en série, les sorties du premier relais 70.1 étant reliées aux entrées du second relais 70.2 de manière à permettre la permutation des phases P1 et P2, l'un d'eux 70.1 commandé par un signal S1 permettant de faire tourner le moteur électrique dans un premier sens, comme illustré sur la figure 6B, l'autre 70.2 commandé par un signal S2 permettant de faire tourner le moteur électrique dans un second sens (inverse au premier), comme illustré sur la figure 6C. En l'absence de signal, les deux relais 70.1 et 70.2 sont à l'état repos et le moteur électrique 68 n'est pas alimenté.

Selon un mode de réalisation, le premier relais 70.1 comprend trois entrées 72.1, 72.2 et 72.3 et six sorties 72.1.1, 72.1.2, 72.2.1, 72.2.2, 72.3.1, 72.3.2.

Le premier relais 70.1 comprend trois contacteurs 74.1, 74.2, 74.3, un pour chaque entrée, susceptibles d'occuper deux états (repos et commuté). Les trois contacteurs sont commandés simultanément par une commande 76. En l'absence de signal, les trois contacteurs sont à l'état repos, comme illustré sur la figure 6A, et relient les entrées 72.1, 72.2, 72.3 respectivement avec les sorties 72.1.1, 72.2.1, 72.3.1. Lorsque la commande 76 reçoit un signal S1, elle commute les trois contacteurs à l'état commuté, comme illustré sur la figure 6B, qui relient les entrées 72.1, 72.2, 72.3 respectivement avec les sorties 72.1.2, 72.2.2, 72.3.2. Les entrées 72.1, 72.2, 72.3 sont reliées respectivement avec les phases P1, P2, P3 de l'alimentation électrique 66.

Le second relais 70.2 comprend six entrées 78.1.1, 78.1.2, 78.2.1, 78.2.2, 78.3.1, 78.3.2 et trois sorties 78.1, 78.2, 78.3.

Le second relais 70.2 comprend trois contacteurs 80.1, 80.2, 80.3, un pour chaque sortie, susceptibles d'occuper deux états (repos et commuté). Les trois contacteurs sont commandés simultanément par une commande 82. En l'absence de signal, les trois contacteurs sont à l'état repos, comme illustré sur la figure 6A, et relient les entrées 78.1.1, 78.2.1, 78.3.1 respectivement avec les sorties 78.1, 78.2, 78.3. Lorsque la commande 82 reçoit un signal S2, elle commute les trois contacteurs à l'état commuté, comme illustré sur la figure 6C, qui relient les entrées 78.1.2, 78.2.2, 78.3.2 respectivement avec les sorties 78.1, 78.2, 78.3.

Les sorties 78.1, 78.2, 78.3 sont reliées aux pôles du moteur électrique 68. Entre les deux relais 70.1 et 70.2, les sorties 72.1.1, 72.1.2, 72.2.1, 72.2.2, 72.3.1, 73.3.2 du premier relais 70.1 sont reliées respectivement aux entrées 78.2.2, 78.1.1, 78.1.2, 78.2.1, 78.3.2, 78.3.1.

Selon l'exemple illustré sur les figures 6A à 6C, en l'absence de signal, le moteur électrique ne fonctionne pas, à la réception d'un signal S1 il tourne dans un premier sens, à réception d'un signal S2 il tourne dans un second sens.

Selon une première variante illustrée sur les figures 6A à 6C, les signaux S1 et S2 émis par le système de régulation 50 via un bus de communication sont convertis par une boîte de contacteurs 84, chacun des contacteurs permettant de manière indépendante le passage ou non du courant électrique susceptible d'exciter l'un ou l'autre des relais.

La boîte de contacteurs 84 comprend autant de contacteurs que de signaux à convertir ainsi que des moyens électroniques permettant de fermer le contacteur adéquat en fonction du signal reçu. Selon ce mode de réalisation, l'une des bornes de chaque contacteur est reliée à la masse, l'autre borne d'un premier contacteur étant reliée à la commande d'un premier relais, l'autre borne du second contacteur étant reliée à la commande du second relais.

L'invention n'est pas limitée à ce mode de réalisation de l'organe de contrôle 52. D'autres solutions sont envisageables comme celles décrites dans la demande de brevet FR-1354199.

Quelle que soit la variante, l'organe de contrôle 52 comprend un ensemble 86 de contacteurs de puissance électrique.

Selon un mode de réalisation illustré sur la figure 5, ces contacteurs de puissance électrique sont commandés par une commande 88 comme par exemple un calculateur. Cet ensemble 86 de contacteur de puissance électrique est localisé sur un circuit imprimé permettant l'insertion de câblages et de contacteurs.

Avantageusement, l'organe de contrôle 52 comprend un convertisseur statique en amont de l'ensemble de contacteurs de puissance électrique, qui n'est pas localisé sur le même circuit imprimé que les contacteurs de puissance électrique.

Selon un mode de réalisation illustré sur la figure 5, un aéronef comprend deux actionneurs 48, 48' (un pour chaque tuyère) qui permettent chacun de faire varier la section variable d'une tuyère à section variable 90, 90', chaque actionneur 48, 48' étant relié par une ligne commande et d'alimentation électrique 92, 92' à un organe de contrôle 52, 52' commandé par une commande 88, 88'.

Quelle que soit la variante, l'aéronef comprend au moins un organe de contrôle 52 qui peut contrôler un ou plusieurs actionneurs 48, 48'. Ainsi, chaque actionneur 48, 48' peut être contrôlé par un unique organe de contrôle 52 ou par deux organes de contrôle 52 de manière à obtenir un système redondant.

De préférence, chaque organe de contrôle 52 délivre en sortie une alimentation électrique triphasée acheminée par la ligne de commande et d'alimentation électrique 92, 92' jusqu'à un actionneur 48, 48'.

Selon une caractéristique de l'invention, un organe de contrôle 52 est connecté à deux alimentations électriques indépendantes, une première alimentation électrique avion 66 et une deuxième alimentation électrique 94 indépendante de la première alimentation électrique avion 66.

De préférence, l'organe de contrôle 52 est alimenté par un générateur moteur et par une deuxième alimentation électrique 94 indépendante des générateurs moteurs.

Avantageusement, l'organe de contrôle 52 comprend une architecture interne qui doit permettre de garantir le niveau requis de disponibilité opérationnelle de l'alimentation électrique tout en minimisant les risques de défaut d'isolation des deux alimentations électriques indépendantes. A cet effet, l'organe de contrôle 52 comprend un ensemble de contacteurs à haut niveau de fiabilité permettant d'empêcher la mise en contact des deux alimentations électriques 66 et 94 de manière électrique et mécanique. De plus, l'architecture électrique de l'organe de contrôle 52 comprend des protections redondantes pour garantir qu'une situation dans laquelle un ou plusieurs contacteurs mettraient en contact les deux alimentations 66 et 94 soit le résultat de pannes très improbables. A cet effet, l'organe de contrôle 52 comprend des contacteurs statiques triphasés à deux états, un des deux états étant dit stable, et contrôlés par un ensemble de capteurs électriques capables de détecter une anomalie de fonctionnement. Avantageusement, un organe de contrôle 52, 52' comprend une première partie permettant de contrôler et d'alimenter au moins un actionneur 48 et une deuxième partie permettant la connexion de manière alternée avec la première alimentation électrique avion 66 ou avec la deuxième alimentation électrique 94. Les deux parties peuvent être disposées dans une même zone de l'aéronef ou dans deux zones différentes la première partie dans la nacelle et la seconde partie dans le fuselage, par exemple au niveau du compartiment électrique et électronique de l'aéronef.

Selon un mode de réalisation illustré sur la figure 5, deux organes de contrôle 52, 52' sont alimentés par des alimentations électriques avion 66, 66' différentes. Ainsi, le dispositif de commande comprend au niveau d'un premier ensemble propulsif, un premier organe de contrôle 52 dédié au contrôle d'une première tuyère à section variable et alimenté par une première alimentation électrique avion 66 reliée indirectement au générateur moteur gauche (respectivement doit) et un deuxième organe de contrôle 52' dédié au contrôle d'une deuxième tuyère à section variable et alimenté par une deuxième alimentation électrique avion 66' reliée indirectement au générateur moteur droit (respectivement gauche).

De préférence, les organes de contrôle 52, 52' sont alimentés par la même deuxième alimentation électrique 94.

Selon une autre caractéristique de l'invention, un coupe circuit 96, 98 est prévu pour isoler chaque alimentation électrique indépendante 66 et 94 de chaque organe de contrôle 52 ou 52'.

Ainsi, comme illustré sur la figure 5, un coupe circuit 96 est prévu pour isoler la première alimentation électrique avion 66 du premier organe de contrôle 52 et un coupe circuit 98 est prévu pour isoler la deuxième alimentation électrique 94 du premier organe de contrôle 52. Ce coupe circuit 98 permet d'isoler la deuxième alimentation électrique 94 du deuxième organe de contrôle 52'.

Un coupe circuit 96' est prévu pour isoler la deuxième alimentation électrique avion 66' du deuxième organe de contrôle 52'.

De préférence, au moins la deuxième partie assurant la connexion alternée de chaque organe de contrôle 52, 52' est disposée au niveau du fuselage et la ligne de commande et d'alimentation électrique 92, 92' chemine dans l'aile jusqu'à l'actionneur 48, 48' contrôlé par ledit organe de contrôle 52, 52'.

Avantageusement, une boite de dérivation 100 est intercalée entre la deuxième alimentation électrique 94 et les organes de contrôle 52, 52'. Comme illustré sur la figure 5, la boîte de dérivation 100 comprend une seule entrée et autant de sortie que d'organe de contrôle 52, 52'.

Cette configuration permet d'éviter une modification coûteuse de l'aile. Selon un autre avantage, l'invention permet d'éviter d'implanter un générateur dédié au dispositif de commande dans l'environnement de la tuyère à section variable. Selon un premier mode de réalisation, la deuxième alimentation électrique 94 est connectée au générateur CSMG.

Cette solution procure un haut niveau de disponibilité et permet de pouvoir contrôler la tuyère à section variable même si la motorisation opposée ne fonctionne plus et que par conséquent le générateur moteur associé ne délivre plus d'électricité.

Selon cette solution, la deuxième alimentation électrique n'est disponible que lorsque l'aéronef est sous condition extrême dite « electrical emergency ». Dans cette circonstance, les générateurs moteurs sont inopérants. Dans un premier temps, l'électricité fournie par le générateur CSMG alimente essentiellement le dispositif de commande de la tuyère à section variable, les autres systèmes de l'aéronef étant alimentés selon un régime minimaliste, les instruments de bord étant en stand-by. A l'issue de la modification de la section de la tuyère à section variable, l'électricité fournie par le générateur CSMG est dédié aux autres fonctions de l'aéronef et notamment aux instruments de bord.

Selon cette solution, l'organe de contrôle 52, 52' comprend une logique permettant de n'autoriser l'alimentation électrique par le générateur CSMG que lorsque les conditions suivantes sont réunies :
- La première alimentation électrique avion 66 n'alimente pas l'organe de contrôle 52,
- Le générateur CSMG est prêt à fournir l'alimentation électrique,
- Le générateur CSMG est autorisé par une logique interne au contrôle de l'alimentation électrique de l'aéronef à fournir de l'alimentation au dispositif de commande de la tuyère à section variable,
- Une demande d'alimentation électrique provient du dispositif de commande de la tuyère à section variable,
- La motorisation de l'aéronef opposée à la motorisation équipée de la tuyère à section variable est inopérante,
- La tuyère à section variable qui demande l'alimentation n'est pas déjà sensiblement ouverte,
- La commande 88 autorise l'enclenchement du ou des contacteurs relié(s) au générateur CSMG.

Selon un deuxième mode de réalisation, la deuxième alimentation électrique 94 est connectée au groupe auxiliaire de puissance APU.

Cette solution procure un haut niveau de disponibilité et permet de pouvoir contrôler la tuyère à section variable même si la motorisation opposée ne fonctionne plus et que par conséquent le générateur moteur associé ne délivre plus d'électricité.

Selon cette solution et en fonction des scénarios de vol et du niveau de disponibilité nécessaire pour les ensembles propulsifs, le groupe auxiliaire de puissance APU peut alors être nécessaire au vol de l'aéronef (par exemple pour les vols de type ETOPS). Par conséquent, avant chaque décollage, il peut être nécessaire de s'assurer du bon fonctionnement du groupe auxiliaire de puissance APU et de sa capacité à démarrer en toutes circonstances lors du vol de l'aéronef.

De manière connue, un bouton de démarrage est prévu dans le cockpit pour démarrer le groupe auxiliaire de puissance APU.

Selon cette solution, l'organe de contrôle 52, 52' comprend une logique permettant de n'autoriser l'alimentation électrique par le groupe auxiliaire de puissance APU que lorsque les conditions suivantes sont réunies :
- La première alimentation électrique avion 66, 66' n'alimente plus le dispositif de commande de la tuyère à section variable,
- le groupe auxiliaire de puissance APU a fini de démarrer et le bouton de démarrage du groupe auxiliaire de puissance APU n'est plus enfoncé,
- le groupe auxiliaire de puissance APU est capable de fournir une alimentation électrique triphasée,
- une demande d'alimentation électrique provient du dispositif de commande de la tuyère à section variable,
- l'organe de contrôle 52, 52' autorise l'enclenchement du ou des contacteurs relié(s) au groupe auxiliaire de puissance APU.

Selon un troisième mode de réalisation, la deuxième alimentation électrique 94 est connectée à au moins un accumulateur d'énergie électrique 60.

Selon cette variante, le dispositif de commande comprend un convertisseur intercalé entre le ou les accumulateurs d'énergie électrique 60 et l'organe de contrôle 52, 52' pour convertir le courant continu délivré par le ou les accumulateur(s) d'énergie électrique 60 en un courant électrique triphasé. Selon un mode de réalisation, ce convertisseur peut être intégré dans un organe de contrôle 52, 52'.

Cette solution procure un haut niveau de disponibilité et permet de pouvoir contrôler la tuyère à section variable même si la motorisation opposée ne fonctionne plus et que par conséquent le générateur moteur associé ne délivre plus d'électricité.

Le ou les accumulateur(s) d'énergie électrique 60 délivre(nt) également la puissance électrique nécessaire au démarrage du groupe auxiliaire de puissance APU. De manière connue, un bouton de démarrage est prévu dans le cockpit pour démarrer le groupe auxiliaire de puissance APU.

Compte tenu de la capacité du ou des accumulateur(s) d'énergie électrique 60, le démarrage du groupe auxiliaire de puissance APU ne peut pas être déclenché concomitamment à l'alimentation électrique du dispositif de commande de la tuyère à section variable par le ou les accumulateur(s) d'énergie électrique 60. Selon cette solution, l'organe de contrôle 52, 52' comprend une logique permettant de n'autoriser l'alimentation électrique par au moins un accumulateur d'énergie électrique 60 que lorsque les conditions suivantes sont réunies :
- La première alimentation électrique avion 66, 66' n'alimente plus le dispositif de commande de la tuyère à section variable,
- le démarrage du groupe auxiliaire de puissance APU n'est pas demandé ou son bouton de démarrage n'est pas enfoncé ou maintenu en position enfoncé,
- une demande d'alimentation électrique provient du dispositif de commande de la tuyère à section variable,
- l'organe de contrôle 52, 52' autorise l'enclenchement du ou des contacteurs relié(s) à l'accumulateur d'énergie électrique 60 ou aux accumulateurs d'énergie électrique 60.

L'invention propose également un procédé de gestion de l'alimentation électrique du dispositif de commande d'une tuyère à section variable qui consiste à alimenter l'organe de contrôle 52, 52' avec la deuxième alimentation électrique 94 lorsque la première alimentation électrique avion 66 est défaillante et n'alimente plus l'organe de contrôle 52, 52'. De préférence, le procédé de gestion comprend une étape qui consiste à vérifier la disponibilité de la deuxième alimentation électrique 94 préalablement au basculement d'alimentation.

## Revendications

1. Aéronef comprenant au moins un générateur moteur gauche (58.1), au moins un générateur moteur droit (58.2), un dispositif de commande d'une tuyère à section variable de l'aéronef comprenant au moins un organe de contrôle (52, 52') qui pilote au moins un actionneur (48) qui engendre via une chaîne de transmission mécanique (46) le mouvement d'au moins une partie mobile (44) de la tuyère à section variable, ledit organe de contrôle (52, 52') étant alimenté par une première alimentation électrique avion (66) reliée à au moins un générateur moteur droit ou gauche, **caractérisé en ce que** l'organe de contrôle (52, 52') est alimenté par une deuxième alimentation électrique (94) reliée à une source d'alimentation électrique de l'aéronef indépendante de la première alimentation électrique avion (66).

2. Aéronef selon la revendication 1, **caractérisé en ce que** l'organe de contrôle (52) est alimenté par un générateur moteur (58.1, 58.2) et par une deuxième alimentation électrique indépendante des générateurs moteurs (58.1, 58.2).

3. Aéronef selon la revendication 1 ou 2, **caractérisé en ce que** la deuxième alimentation électrique (94) est reliée à un générateur CSMG de l'aéronef.

4. Aéronef selon la revendication 1 ou 2, **caractérisé en ce que** la deuxième alimentation électrique (94) est reliée à un groupe auxiliaire de puissance APU de l'aéronef.

5. Aéronef selon la revendication 1 ou 2, **caractérisé en ce que** la deuxième alimentation électrique (94) est reliée à au moins un accumulateur d'énergie électrique (60) de l'aéronef.

6. Aéronef selon l'une des revendications précédentes, **caractérisé en ce que** l'organe de contrôle (52, 52') comprend une première partie permettant de contrôler et d'alimenter au moins un actionneur (48) et une deuxième partie permettant la connexion de manière alternée avec la première alimentation électrique avion (66) ou avec la deuxième alimentation électrique (94).

7. Aéronef selon la revendication 6, **caractérisé en ce qu'**au moins la deuxième partie de l'organe de contrôle (52, 52') est disposée au niveau du fuselage de l'aéronef.

8. Aéronef selon l'une des revendications précédentes, **caractérisé en ce que** l'organe de contrôle (52, 52') comprend un ensemble (86) de contacteurs de puissance électrique permettant d'empêcher la mise en contact des deux alimentations électriques (66, 94) de manière électrique et mécanique.

9. Aéronef selon l'une des revendications précédentes, **caractérisé en ce qu'**il comprend au niveau d'un premier ensemble propulsif un premier organe de contrôle (52) dédié au contrôle d'une première tuyère à section variable et alimenté par une première alimentation électrique avion (66) reliée indirectement au générateur moteur gauche (58.1) et au niveau d'un second ensemble propulsif un deuxième organe de contrôle (52') dédié au contrôle d'une deuxième tuyère à section variable et alimenté par une deuxième alimentation électrique avion (66') reliée indirectement au générateur moteur droit (58.2).

10. Aéronef selon l'une des revendications 1 à 8, **caractérisé en ce qu'**il comprend au niveau d'un premier ensemble propulsif un premier organe de contrôle (52) dédié au contrôle d'une première tuyère à section variable et alimenté par une première alimentation électrique avion (66) reliée indirectement au générateur moteur droit (58.2) et au niveau d'un second ensemble propulsif un deuxième organe de contrôle (52') dédié au contrôle d'une deuxième tuyère à section variable et alimenté par une deuxième alimentation électrique avion (66') reliée indirectement au générateur moteur gauche (58.1).

11. Aéronef selon la revendication 9 ou 10, **caractérisé en ce que** les deux organes de contrôle (52, 52') sont alimentés par la même deuxième alimentation électrique (94).

12. Aéronef selon l'une des revendications précédentes, **caractérisé en ce qu'**il comprend une boîte de dérivation (100) avec une première entrée reliée à la deuxième alimentation électrique (94) et des sorties chacune reliée à un organe de contrôle (52, 52').

13. Aéronef selon l'une des revendications précédentes, **caractérisé en ce qu'**il comprend pour chaque alimentation électrique un coupe-circuit (96,98) pour isoler l'alimentation électrique de l'organe de contrôle (52).

14. Procédé de gestion de l'alimentation électrique d'un dispositif de commande d'une tuyère à section variable d'un aéronef, ledit dispositif comprenant au moins un organe de contrôle (52, 52') qui pilote au moins un actionneur (48) qui engendre via une chaîne de transmission mécanique (46) le mouvement d'au moins une partie mobile (44) de la tuyère à section variable, ledit organe de contrôle (52, 52') étant alimenté par une première alimentation électrique avion (66) reliée à au moins un générateur moteur droit ou gauche de l'aéronef, **caractérisé en ce que** le procédé consiste à alimenter l'organe de contrôle (52, 52') par une deuxième alimentation électrique (94) reliée à une source d'alimentation électrique de l'aéronef indépendante de la première alimentation électrique avion (66) lorsque ladite première alimentation électrique avion (66) n'alimente plus l'organe de contrôle (52, 52').

15. Procédé de gestion selon la revendication 14, **caractérisé en ce qu'**il consiste à vérifier la disponibilité de la deuxième alimentation électrique (94) préalablement au basculement d'alimentation.

## Patentansprüche

1. Luftfahrzeug mit wenigstens einem linken Antriebsgenerator (58.1), wenigstens einem rechten Antriebsgenerator (58.2) und mit einer Steuervorrichtung einer Düse mit variablem Querschnitt des Luftfahrzeugs, die wenigstens eine Steuereinheit (52, 52') aufweist, die wenigstens einen Stellantrieb (48) steuert, der über eine mechanische Transmissionskette (46) die Bewegung wenigstens eines beweglichen Teils (44) der Düse mit variablem Querschnitt bewirkt, wobei die Steuereinheit (52, 52') durch eine erste elektrische Flugzeugversorgung (66) versorgt ist, die mit wenigstens einem linken oder rechten Generator verbunden ist, **dadurch gekennzeichnet, dass** die Steuereinheit (52, 52') durch eine zweite elektrische Versorgung (94) versorgt ist, die mit einer elektrischen Versorgungsquelle des Luftfahrzeugs verbunden ist, die von der ersten elektrischen Flugzeugversorgung (66) unabhängig ist.

2. Luftfahrzeug nach Anspruch 1, **dadurch gekennzeichnet, dass** die Steuereinheit (52) durch einen Antriebsgenerator (58.1, 58.2) und durch eine zweite elektrische Versorgung versorgt ist, die unabhängig von den Antriebsgeneratoren (58.1, 58.2) ist.

3. Luftfahrzeug nach Anspruch 1 oder 2, **dadurch gekennzeichnet, dass** die zweite elektrische Versorgung (94) mit einem CSMG-Generator des Luftfahrzeugs verbunden ist.

4. Luftfahrzeug nach Anspruch 1 oder 2, **dadurch gekennzeichnet, dass** die zweite elektrische Versorgung (94) mit einem APU-Hilfstriebwerk des Luftfahrzeugs verbunden ist.

5. Luftfahrzeug nach Anspruch 1 oder 2, **dadurch gekennzeichnet, dass** die zweite elektrische Versorgung (94) mit wenigstens einem Speicher des Luftfahrzeugs für elektrische Energie (60) verbunden ist.

6. Luftfahrzeug nach einem der vorhergehenden Ansprüche, **dadurch gekennzeichnet, dass** die Steuereinheit (52, 52') einen ersten Teil aufweist, der es gestattet, wenigstens einen Stellantrieb (48) zu steuern und zu versorgen, und einen zweiten Teil aufweist, der wechselweise die Verbindung zwischen der ersten elektrischen Flugzeugversorgung (66) oder mit der zweiten elektrischen Versorgung (94) ermöglicht.

7. Luftfahrzeug nach Anspruch 6, **dadurch gekennzeichnet, dass** wenigstens der zweite Teil der Steuereinheit (52, 52') im Bereich des Rumpfes des Luftfahrzeugs angeordnet ist.

8. Luftfahrzeug nach einem der vorhergehenden Ansprüche, **dadurch gekennzeichnet, dass** die Steuereinheit (52, 52') eine Menge (86) von elektrischen Leistungsschaltern aufweist, die es gestatten, ein In-Kontakt-Bringen der beiden elektrischen Versorgungen (66, 94) auf elektrischem oder mechanischem Wege zu verhindern.

9. Luftfahrzeug nach einem der vorhergehenden Ansprüche, **dadurch gekennzeichnet, dass** dieses im Bereich einer ersten Strahleinheit eine erste Steuereinheit (52) aufweist, die zur Steuerung einer ersten Düse mit variablem Querschnitt vorgesehen ist und durch eine erste elektrische Flugzeugversorgung (66) versorgt ist, die indirekt mit dem linken Antriebsgenerator (58.1) verbunden ist, und im Bereich einer zweiten Strahleinheit eine zweite Steuereinheit (52') aufweist, die zur Steuerung einer zweiten Düse mit variablem Querschnitt vorgesehen ist und durch eine zweite elektrische Flugzeugversorgung (66') versorgt ist, die indirekt mit dem rechten Antriebsgenerator (58.2) verbunden ist.

10. Luftfahrzeug nach einem der Ansprüche 1 bis 8, **dadurch gekennzeichnet, dass** dieses im Bereich einer ersten Strahleinheit eine erste Steuereinheit (52) aufweist, die zur Steuerung einer ersten Düse mit variablem Querschnitt vorgesehen ist und von einer ersten elektrischen Flugzeugversorgung (66) versorgt ist, die indirekt mit dem rechten Antriebsgenerator (58.2) verbunden ist, und im Bereich einer zweiten Strahleinheit eine zweite Steuereinheit (52') aufweist, die zur Steuerung einer zweiten Düse mit variablem Querschnitt vorgesehen ist und durch eine zweite elektrische Flugzeugversorgung (66') versorgt ist, die indirekt mit dem linken Antriebsgenerator (58.1) verbunden ist.

11. Luftfahrzeug nach Anspruch 9 oder 10, **dadurch gekennzeichnet, dass** die beiden Steuereinheiten (52, 52') von derselben zweiten elektrischen Versorgung (94) versorgt sind.

12. Luftfahrzeug nach einem der vorhergehenden Ansprüche, **dadurch gekennzeichnet, dass** dieses einen Schaltkasten (100) aufweist, der einen ersten Eingang umfasst, der mit der zweiten elektrischen Versorgung (94) verbunden ist, und der Ausgänge umfasst, die jeweils mit einer Steuereinheit (52, 52') verbunden sind.

13. Luftfahrzeug nach einem der vorhergehenden Ansprüche, **dadurch gekennzeichnet, dass** dieses für jede elektrische Versorgung einen Schutzschalter (96, 98) aufweist, um die elektrische Versorgung von der Steuereinheit (52) zu trennen.

14. Verfahren für die Steuerung der elektrischen Versorgung einer Steuervorrichtung einer Düse mit variablem Querschnitt eines Luftfahrzeugs, wobei die Vorrichtung wenigstens eine Steuereinheit (52, 52') aufweist, die wenigstens einen Stellantrieb (48) steuert, der über eine mechanische Transmissionskette (46) die Bewegung wenigstens eines beweglichen Teils (44) der Düse mit variablem Querschnitt bewirkt, wobei die Steuereinheit (52, 52') durch eine erste elektrische Flugzeugversorgung (66) versorgt ist, die mit wenigstens einem rechten oder linken Antriebsgenerator des Luftfahrzeugs verbunden ist, **dadurch gekennzeichnet, dass** das Verfahren darin besteht, die Steuereinheit (52, 52') über eine zweite elektrische Versorgung (94) zu versorgen, die mit einer elektrischen Versorgungsquelle des Luftfahrzeugs verbunden ist, die von der ersten elektrischen Flugzeugversorgung (66) unabhängig ist, wenn die erste elektrische Flugzeugversorgung (66) die Steuereinheit (52, 52') nicht mehr versorgt.

15. Verfahren zur Steuerung nach Anspruch 14, **dadurch gekennzeichnet, dass** dieses darin besteht, die Verfügbarkeit der zweiten elektrischen Versorgung (94) vor einem Umschalten der Versorgung zu überprüfen.

## Claims

1. Aircraft comprising at least one left motor generator (58.1), at least one right motor generator (58.2), a control device for a jet pipe nozzle with variable cross-section of the aircraft comprising at least one control member (52, 52') which drives at least one actuator (48) which generates, via a mechanical transmission chain (46) the movement of at least one moving part (44) of the jet type nozzle with variable cross-section, the control member (52, 52') being powered by a first airplane electrical power supply (66) linked to at least one right or left motor generator, **characterized in that** the control member (52, 52') is powered by a second electrical power supply (94) linked to an electrical power source of the aircraft that is independent of the first airplane electrical power supply (66).

2. Aircraft according to claim 1, **characterized in that** the control member (52) is powered by a motor generator (58.1, 58.2) and by a second electrical power supply independent of the motor generators (58.1, 58.2).

3. Aircraft according to claim 1 or 2, **characterized in that** the second electrical power supply (94) is linked to a CSMG generator of the aircraft.

4. Aircraft according to claim 1 or 2, **characterized in that** the second electrical power supply (94) is linked to an auxiliary power unit APU of the aircraft.

5. Aircraft according to claim 1 or 2, **characterized in that** the second electrical power supply (94) is linked to at least one electrical energy accumulator (60) of the aircraft.

6. Aircraft according to one of the preceding claims, **characterized in that** the control member (52, 52') comprises a first part to control and power at least one actuator (48) and a second part to alternately connect with the first airplane electrical power supply (66) or with the second electrical power supply (94).

7. Aircraft according to claim 6, **characterized in that** at least the second part of the control member (52, 52') is positioned on the fuselage of the aircraft.

8. Aircraft according to one of the preceding claims, **characterized in that** the control member (52, 52') comprises a set (86) of electrical power contactors to prevent contact between the two electrical power supplies (66, 94) electrically and mechanically

9. Aircraft according to one of the preceding claims, **characterized in that** it comprises, in a first propulsive assembly, a first control member (52) dedicated to the control of a first jet pipe nozzle with variable cross-section and powered by a first airplane electrical power supply (66) linked indirectly to the left motor generator (58.1) and, in a second propulsive assembly, a second control member (52') dedicated to the control of a second jet pipe nozzle with variable cross-section and powered by a second airplane electrical power supply (66') linked indirectly to the right motor generator (58.2).

10. Aircraft according to one of claims 1 to 8, **characterized in that** it comprises, in a first propulsive assembly, a first control member (52) dedicated to the control of a first jet pipe nozzle with variable cross-section and powered by a first airplane electrical power supply (66) linked indirectly to the right motor generator (58.2) and, in a second propulsive assembly, a second control member (52') dedicated to the control of a second jet pipe nozzle with variable cross-section and powered by a second airplane electrical power supply (66') linked indirectly to the left motor generator (58.1).

11. Aircraft according to claim 9 or 10, **characterized in that** the two control members (52, 52') are powered by the same second electrical power supply (94).

12. Aircraft according to one of the preceding claims, **characterized in that** it comprises a bypass box (100) with a first input linked to the second electrical power supply (94) and outputs each linked to a control member (52, 52').

13. Aircraft according to one of the preceding claims, **characterized in that** it comprises, for each electrical power supply a circuit breaker (96, 98) to isolate the electrical power supply from the control member (52).

14. Management method of the electrical power supply of a control device for a jet pipe nozzle with variable cross-section of an aircraft, said device comprising at least one control member (52, 52') which drives at least one actuator (48) which generates, via a mechanical transmission chain (46), the movement of at least one moving part (44) of the jet pipe nozzle with variable cross-section, the control member (52, 52') being powered by a first airplane electrical power supply (66) linked to at least one right or left motor generator of the aircraft, **characterized in that** the method consists in powering the control member (52, 52') by a second electrical power supply (94) linked to an electrical power source of the aircraft independent of the first airplane electrical power supply (66) when the first airplane electrical power supply (66) no longer powers the control member (52, 52').

15. Management method according to claim 14, **characterized in that** it comprises checking the availability of the second electrical power supply (94) prior to the power supply switchover.
